# EUROPÄISCHE PATENTANMELDUNG

(11) **EP 3 885 078 A1**
(43) Veröffentlichungstag der Anmeldung: **29.09.2021**
(21) Anmeldenummer: 20165618.8
(22) Anmeldetag: 25.03.2020
(51) Int. Cl.: B25J 9/16

(54) **HYPERSPEKTRALE OBERFLÄCHENABTASTUNG EINES KÖRPERS**

(71) Anmelder: Siemens Aktiengesellschaft, 80333 München (DE)
(72) Erfinder: Denneler, Stefan, 81371 München (DE); Gigler, Alexander Michael, 86836 Untermeitingen (DE); Felkel, Diana, 13158 Berlin (DE); Forster, Frank, 81739 München (DE); Lipp, Christian, 94065 Waldkirchen (DE); Mais, Stephan, 14656 Brieselang (DE); Paust, Tobias, 89340 Leipheim (DE)

(57) **Zusammenfassung**

Die Erfindung gibt eine Anordnung zur hyperspektralen Oberflächenabtastung eines Körpers (5), aufweisend:
- einen Roboterarm (1),
- eine an dem ersten Ende (1.1) des Roboterarms (1) angeordnete hyperspektrale Detektionsvorrichtung (2),
- eine an dem ersten Ende (1.1) des Roboterarms (1) angeordnete Beleuchtungsvorrichtung (3) und
- eine Steuer- und Recheneinheit (4), die eingerichtet ist, das erste Ende (1.1) des Roboterarms (1) derart entlang vorab ermittelter Trajektorien zu bewegen, dass ein vorbestimmter Oberflächenbereich (5.1) des Körpers (5) hyperspektral abgetastet wird.

Ein zugehöriges Verfahren zur hyperspektralen Oberflächenabtastung des Körpers (5) wird ebenfalls angegeben.

## Beschreibung

### GEBIET DER ERFINDUNG

Die Erfindung betrifft eine Anordnung und ein Verfahren zur hyperspektralen Oberflächenabtastung eines Körpers. Durch die Erfindung kann jede beliebige Freiform spektral abgetastet werden. Im gesamten Kontext der Erfindung wird unter "hyperspektral" der Übersichtlichkeit halber auch "multispektral" verstanden.

### HINTERGRUND DER ERFINDUNG

Der Schlüssel moderner Spektroskopie liegt in der ortsaufgelösten Dechiffrierung der im reflektierten oder absorbierten Licht enthaltenen Informationen. Dies wird durch die Technik des "Hyperspectral Imaging" (HSI) ermöglicht, eine Art Zeilenkamera, mit der typischerweise im sichtbaren als auch im nahen Infrarotbereich durch Bewegung des Objektes oder der Kamera vollständig spektral aufgelöste Bilder erzeugt werden können. Je nach Arbeitsabstand und verwendetem Objektiv können km² oder aber µm² große Bereiche untersucht werden.

Bei sehr kostenintensiven Formen in der initialen Fertigung, z.B. komplexe Gusskörper, bieten sich Wiederaufarbeitungsverfahren zur Verlängerung der Nutzungsdauer der teuren Strukturen an. Vor dem erneuten Aufbau der Oberflächenbeschichtungen erfolgt daher eine vollständige Entschichtung der Struktur.

Im Zuge der Verbreitung des 3D Drucks und der adaptiven Fertigung sind jedoch Körper und Bauteile in jeder denkbaren Geometrie möglich, die sogenannte Freiform Geometrie, die viele neue Möglichkeiten bietet.

In bekannten Prozessen der Oberflächenbeschichtung oder - entschichtung werden Oberflächen nur dann automatisiert bearbeitet, wenn die Geometrie der zu bearbeiteten Oberfläche bekannt ist und sie durch das Prozessgerät erreichbar ist. Zur Erkennung und Quantifizierung der Oberflächenmaterialien kann z.B. die Methode des "Hyperspectral Imaging (HSI)" (= hyperspektrale Bildgebung) genutzt werden. Zumeist handelt es sich bei diesen Abbildungsgeräten um zeilenweise Rasterverfahren, bei denen der Materialkontrast entlang einer Linie bei einem festen Fokus in Form von Reflexionsspektren aufgenommen wird.

Auf Grund der Zerstörungsfreiheit der Methode bietet sich die HSI grundsätzlich für den Nachweis von Oberflächenveränderungen oder auch Rückständen nach oder während eines Entschichtungsprozesses an. Ebenso ermöglicht die HSI die Erkennung und Lokalisierung von Kontaminationen vor Beschichtungsschritten. In der europäischen Offenlegungsschrift EP 1 598 121 A2 wird ein laserbasierter Entschichtungsprozess exemplarisch beschrieben.

Das Untersuchen eines Körpers in Freiform führt hierbei allerdings zu Herausforderungen bezüglich der Robustheit und der Zuverlässigkeit der HSI-Messung, da es eine herkömmliche Regelung auf die Parameter, wie Bewegung entlang der Freiform, Abstand zu dieser und zugelassener Winkelbereich, in automatisierter Form derzeit nicht gibt. Die abbildende Hyperspektralkamera muss stets in einem optimalen Fokus-Abstand und in der optimalen Orientierung zum untersuchten Objekt geführt werden.

Die Bewegung entlang der Freiform lässt sich bis heute nicht automatisiert bewerkstelligen. Um die Visualisierung zuverlässig zu erreichen, muss der Abstand im Bereich der Fokus-Dynamik bleiben. Die Hyperspektralkamera sollte möglichst senkrecht zu der Oberfläche sein. Eine Ausleuchtung der Oberfläche ist nicht im geeigneten Winkel zur Detektion und nicht adaptiv gegenüber der Freiform möglich.

Das Problem wird bisher dadurch gelöst, dass manuell oder im besten Fall halbautomatisiert an die Oberfläche herangefahren wird, und unter nicht optimalen Bedingungen - z.B. Kompromiss bei Fokus, Orientierung etc. - die Bestimmung der Oberflächenbeschaffenheit durchgeführt wird.

Das Problem wird auch dadurch gelöst, dass die Form des Bauteils auf die herkömmlichen Möglichkeiten der Bearbeitung angepasst wurde, und dadurch die Bearbeitung automatisiert durchgeführt werden kann; jedoch auf Kosten der optimalen Geometrie und daraus folgend durch Erzeugen von zusätzlichen Materialkosten und einem suboptimalen Betrieb der Erzeugnisse. Ferner dauert das Verfahren dann deutlich länger.

Das Problem wurde oft auch nicht betrachtet und dadurch wurden Einbußen in Bearbeitungsgenauigkeit, Bauteilzuverlässigkeit und -haltbarkeit in Kauf genommen.

Manuelle Materialbearbeitung nach einer meist thermischen oder chemischen Kontrastierung der Oberflächen, wie es heutzutage beispielsweise beim Prozess des "Turbine-Blade-Refurbishment" durchgeführt wird, sind bekannt.

In der Offenlegungsschrift DE 10 2018 128 993 A1 wird das spektroskopische Messverfahren, insbesondere auch die Verwendung einer Hyperspektralkamera, beispielhaft beschrieben.

### ZUSAMMENFASSUNG DER ERFINDUNG

Es ist Aufgabe der Erfindung, eine Lösung anzugeben, durch die die Oberflächenbeschaffenheit eines Körpers nach einer Entschichtung einfach überprüft werden kann.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Das vorgestellte System löst die oben genannte Aufgabe durch eine geeignete Anordnung von benutzten Komponenten, ein Ausnutzen der für jede Komponente optimalen Bedingungen und eine Nutzung sämtlicher zur Verfügung stehender Informationen.

In einem ersten Aspekt dient ein Roboterarm der flexiblen Positionierung einer Detektionsvorrichtung sowie zum Führen dieser entlang einer geeigneten Trajektorie entlang der Freiform des entschichteten Körpers. Die Anordnung mit dem Roboterarm nutzt die bekannte dreidimensionale Geometrie des Körpers aus dem Druck bzw. der Herstellung (digitaler Zwilling) der ursprünglichen Form.

In einem zweiten Aspekt wird eine Beleuchtungsvorrichtung zur Beleuchtung der Oberfläche zur Erkennung des Oberflächenmaterials am Roboterarm montiert und flexibel in einem bestimmten Winkelbereich veränderbar angeordnet, sodass verhindert werden kann, dass direkte Reflektionen des Lichtes von der Oberfläche detektiert werden. Diese tragen keine spektralen Materialinformationen. Abhängig von der Krümmung der Oberfläche kann die Beleuchtungsvorrichtung angepasst werden.

In einem dritter Aspekt umfasst die Detektionsvorrichtung eine Hyperspektralkamera, die für jede Position über der Oberfläche der Freiform in einem richtigen Abstand (= Fokus) gebracht und senkrecht zur Oberfläche des Körpers ausgerichtet wird. Mit der dazu geeignet platzierten Beleuchtungsvorrichtung stellt die Anordnung eine Art Dunkelfeldbeleuchtung dar. Abhängig von den Aufnahmeparametern der Hyperspektralkamera (Integrationszeit, Anzahl der Mittelungen, etc.), der Krümmung der Oberfläche und ihrer Beschaffenheit (Reflektivität) bewegt sich der Roboterarm mit angepasster Geschwindigkeit über den Körper. Die Relativgeschwindigkeit der Messlinie gegenüber der Oberfläche wird konstant gehalten.

In einem vierten Aspekt wird eine prädiktive Analyse zur objektiven Bestimmung der gesuchten Oberflächeneigenschaften des Körpers. Die Spektroskopie erlaubt es, Zustände (Alterung, Feuchte, Fremdmaterial, etc.), Beschaffenheiten (Schichtdicken, Materialübergangsbereiche, Homogenität, etc.) und Materialzusammensetzungen mittels statistischer Modelle zu bestimmen. Die prädiktive Analyse ist robust, wenn der Informationsgehalt der gesuchten Größe sich aus dem Spektrum des Rauschens oder anderer Störgrößen abhebt. Bei der adaptiven hyperspektralen Bildgebung in dieser Form werden Störgroßen dadurch minimiert, weil die Aufnahmeumgebung konstant bleibt, obwohl sich die Oberflächengeometrie stark verändert während eines Abfahrens der Freiform des Körpers.

In einem fünften Aspekt werden die Fahrwege des Roboterarms optimiert. Dadurch, dass die Freiformgeometrie als auch die optimalen Parameter jeder Komponente bekannt sind, wird im Vorfeld eine geeignete Scan-3D-Bahn berechnet, sodass ein in der Geschwindigkeit optimiertes Scansystem entsteht. Diese optimierten Fahrwege müssen zudem flexibel sein, falls sich zeitliche Änderungen am Körper selbst, oder auch an der Oberfläche ergeben (Verzug, Fließen, Alterung, etc.). Durch die geeignete Bahnplanung unter Berücksichtigung der konkaven und konvexen Biegungen unter Einhaltung von tolerablen Bereichen in Abstand und Winkel zur Oberfläche sowie bei der Relativgeschwindigkeit.

In einem sechsten Aspekt werden die erhaltenen Informationen als Feedback für die Bahnparameter gemappt (automatisierter Schleifprozess oder andere Oberflächenbearbeitung nach einem hyperspektralen Oberflächenscan). Im Beispiel einer Kontamination soll bestimmt werden, wo und wie stark die Oberfläche beeinträchtigt ist. Für die nächsten Bearbeitungsschritte kann dadurch eine optimierte adaptive Bearbeitung erreicht werden.

Die Erfindung beansprucht eine Anordnung zur hyperspektralen Oberflächenabtastung eines Körpers, aufweisend:
- einen Roboterarm,
- eine am ersten Emde des Roboterarms angeordnete hyperspektrale Detektionsvorrichtung,
- eine am ersten Emde des Roboterarms angeordnete Beleuchtungsvorrichtung und
- eine Steuer- und Recheneinheit, die eingerichtet ist, das erste Ende des Roboterarms derart entlang vorab ermittelter Trajektorien zu bewegen, dass ein vorbestimmter Oberflächenbereich des Körpers hyperspektral abgetastet wird.

Unter "Roboter" wird im Lichte der Erfindung jede programmierbare, automatisierte technische Apparatur verstanden.

Unter erweiterter Realität (Englisch: augmented reality) kurz AR wird die computergestützte Erweiterung der Realitätswahrnehmung verstanden. Diese Information kann alle menschlichen Sinnesmodalitäten ansprechen. Häufig wird jedoch unter erweiterter Realität nur die visuelle Darstellung von Informationen verstanden, also die Ergänzung von Bildern oder Videos mit computergenerierten Zusatzinformationen oder virtuellen Objekten mittels Einblendung bzw. Überlagerung.

Die Erfindung bietet den Vorteil, dass ein Teil der Oberfläche oder die ganze Oberfläche eines Körpers, der nahezu jegliche Form aufweisen kann, hyperspektral gescannt werden kann. Bevorzugt ist der Körper vor der Abtastung entschichtet bzw. gereinigt worden. Der Oberflächenbereich kann auch die gesamte Oberfläche des Körpers umfassen.

In einer Weiterbildung kann die Steuer- und Recheneinheit eingerichtet sein, auf Basis von gespeicherten CAD Daten des Körpers oder von Daten eines digitalen Zwillings des Körpers die Trajektorien zu ermitteln. Dadurch ist eine Bahnplanung für den Roboterarm einfach möglich.

In einer Weiterbildung kann die Steuer- und Recheneinheit eingerichtet sein, aufgrund einer automatisierten Geometriemessung des Körpers mit einem an dem Roboterarm angeordneten Sensor die Trajektorien zu ermitteln. Vorab kann so die Geometrie des Körpers und damit der Oberfläche sehr genau ermittelt werden.

In einer Weiterbildung kann die Steuer- und Recheneinheit eingerichtet sein, aus der abgetasteten hyperspektralen Messdaten des Oberflächenbereichs durch prädikative Analyse die physikalischen und/oder chemischen Eigenschaften des Oberflächenbereichs durch Ableitung aus bekannten Referenzdaten zu ermitteln.

Bei der prädikativen Analyse (Predictive Analytics) werden u.a. unter Verwendung von Big Data und Machine-Learning-Technologien strukturierte und unstrukturierte Daten analysiert, um zukünftige Ereignisse und Resultate vorhersagen zu können. Ebenso wie im Data-Mining werden für die prädikative Analyse statistische und mathematische Verfahren sowie Algorithmen verwendet, um Muster, Zusammenhänge und Trends aufzuzeigen.

In einer Weiterbildung kann die hyperspektrale Detektionsvorrichtung eine Hyperspektralkamera aufweisen.

In einer weiteren Ausgestaltung kann die Steuer- und Recheneinheit eingerichtet sein, die Hyperspektralkamera über dem Oberflächenbereich in einem Fokusabstand zu halten und die Aufnahmerichtung der Hyperspektralkamera senkrecht zur Oberfläche des Körpers auszurichten.

In einer weiteren Ausgestaltung kann die Steuer- und Recheneinheit eingerichtet sein, die Relativgeschwindigkeit einer Abtastlinie der Hyperspektralkamera zu dem Oberflächenbereich konstant zu halten.

In einer weiteren Ausbildung kann die Beleuchtungsvorrichtung eingerichtet sein, die Winkelstellung der Ausleuchtung des Oberflächenbereichs zu verändern.

In einer weiteren Ausgestaltung kann die Steuer- und Recheneinheit eingerichtet sein, die abgetasteten hypespektralen Messdaten mit dem Oberflächenbereich des Körpers zu mappen und daraus Trajektorien für einen weiteren Entschichtungsprozess des Körpers abzuleiten. Dadurch erfolgt eine geänderte Bahnplanung, beispielsweise für einen erneuten Schleifprozess, um mangelhaft entschichte Bereiche der Oberfläche erfolgreich zu entschichten.

Die Erfindung beansprucht auch ein automatisiertes Verfahren zur hyperspektralen Oberflächenabtastung eines Körpers, wobei eine an einem Roboterarm angeordnete hyperspektrale Detektionsvorrichtung und eine Beleuchtungsvorrichtung derart entlang vorab ermittelter Trajektorien bewegt werden, dass ein vorbestimmter Oberflächenbereich des Körpers hyperspektral abgetastet wird.

In einer Weiterbildung des Verfahrens können auf Basis von gespeicherten CAD Daten des Körpers oder auf Basis von insbesondere geometrischen Daten eines digitalen Zwillings des Körpers die Trajektorien ermittelt werden.

In einer weiteren Ausgestaltung des Verfahrens können aufgrund einer automatisierten Geometriemessung des Körpers mit einem am Roboterarm angeordneten Sensor die Trajektorien ermittelt werden. Der Sensor kann insbesondere ein Laser oder eine Kamera sein.

In einer weiteren Ausprägung des Verfahrens können aus den abgetasteten hyperspektralen Messdaten des Oberflächenbereichs durch eine prädikative Analyse die physikalischen und/oder chemischen Eigenschaften des Oberflächenbereichs ermittelt werden. Beispielsweise können Beschichtungsreste erkannt und die Art der Beschichtung ermittelt werden.

In einer weiteren Ausgestaltung des Verfahrens können die abgetasteten hypespektralen Messdaten mit dem Oberflächenbereich des Körpers gemappt werden und daraus Trajektorien für einen weiteren Entschichtungsprozess des Körpers abgeleitet werden. Somit können mangelhaft entschichtete Stellen des Körpers erneut entschichtet werden. Dadurch wird auch eine Optimierung einer vorangehenden ersten Entschichtung möglich.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
FIG. 1 ein Blockschaltbild einer Anordnung zur hyperspektralen Oberflächenabtastung eines Körpers und
FIG. 2 ein Flussdiagramm eines automatisierten Verfahrens zur hyperspektralen Oberflächenabtastung eines Körpers,

### DETAILLIERTE BESCHREIBUNG DER ERFINDUNG

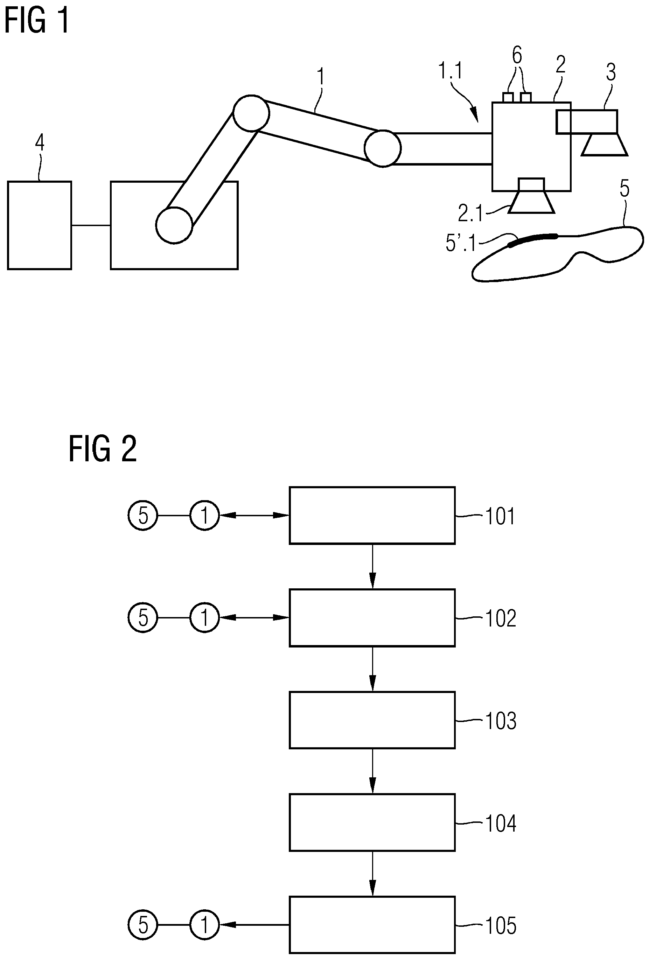

FIG. 1 zeigt eine Blockschaltbild einer Anordnung zur hyperspektralen Oberflächenabtastung und -analyse eines Körpers 5, beispielsweise einer entschichteten Turbinenschaufel. Ein Roboterarm 1 wird durch eine Steuer- und Recheneinheit 4 auf Trajektorien bewegt. Am ersten Ende 1.1 des Roboterarms 1, das ist das frei bewegliche Ende, befindet sich eine Beleuchtungsvorrichtung 3 und eine hyperspektrale Detektionseinrichtung 2, die eine Hyperspektralkamera 2.1 aufweist. Durch die Bewegung des ersten Endes 1.1 entlang eines ausgewählten Oberflächenbereichs 5.1 des Körpers 5 wird der Oberflächenbereich 5.1 hyperspektral abgetastet, in anderen Worten hyperspektral gescannt. Bevorzugt erfolgt dies durch eine Linienabtastung mit einer linienförmigen Beleuchtung, ähnlich einem Vorlagenscan in einem Scanner bzw. Kopierer.

Die so gewonnenen hyperspektralen Daten werden in der Steuer- und Recheneinheit 4 gemäß Verfahren nach dem Stand der Technik ausgewertet. Bevorzugt werden durch eine prädikative Analyse die physikalischen und/oder chemischen Eigenschaften des Oberflächenbereichs 5.1 ermittelt. So kann beispielsweise festgestellt werden, ob eine Beschichtung des Körpers 5 in diesem Bereich vollständig entfernt worden ist. Die so gewonnenen Eigenschaften des Oberflächenbereichs 5.1 können für die Bahnplanung der Anordnung für einen weiteren Entschichtungsprozess verwendet werden. Stellen, die nicht vollständig entschichtet wurden, können so einfach ermittelt werden und einer Nacharbeitung zugeführt werden.

Die Steuer- und Recheneinheit 4 ist bevorzugt ausgebildet und programmiert, die Hyperspektralkamera 2.1 über dem Oberflächenbereich 5.1 in einem Fokusabstand zu halten, d.h. die Aufnahme immer zu fokussieren. Außerdem wird bevorzugt die Aufnahmerichtung der Hyperspektralkamera 2.1 senkrecht zu der Oberfläche des Körpers 5 ausgerichtet.

Des Weiteren ist die Steuer- und Recheneinheit 4 ausgebildet und programmiert, d.h. eingerichtet, die Relativgeschwindigkeit einer Abtastlinie der Hyperspektralkamera 2.1 zu dem Oberflächenbereich 5.1 konstant zu halten.

Die Beleuchtungsvorrichtung 3 ist außerdem bevorzugt eingerichtet, die Winkelstellung der Ausleuchtung des Oberflächenbereichs 5.1 zu verändern. Somit können ungewünschte Reflexionen in die Hyperspektralkamera 2.1 vermieden werden.

Die Trajektorien der hyperspektralen Oberflächenabtastung können aus den CAD-Daten des Körpers oder eines digitalen Zwillings des Körpers 5 gewonnen werden. Alternativ ist es auch möglich, vorab mithilfe von an dem Roboterarm 1 angebrachten Sensoren 6 oder auch lediglich einem einzigen Sensor 6 den Körper 5 zu vermessen und daraus die Trajektorien für den abzutastenden Oberflächenbereich 5.1 zu gewinnen. Der Sensor 6 kann beispielsweise ein Laser oder eine Kamera sein.

Durch die erfindungsgemäße Anordnung kann jede beliebige Freiform abgetastet werden.

FIG. 2 zeigt ein Ablaufdiagramm eines Verfahrens zur hyperspektralen Oberflächenabtastung und -analyse eines Körpers 5, beispielsweise einer entschichteten Turbinenschaufel. In einem ersten Schritt 101 erfolgt die Bahnplanung für einen Roboterarm 1, an dessen ersten Ende 1.1 eine Beleuchtungsvorrichtung und eine hyperspektrale Detektionsvorrichtung angeordnet sind. Dazu muss die Geometrie des Körpers 5 bekannt sein. Dafür können entweder die CAD Daten oder die Daten eines digitalen Zwillings des Körpers 5 verwendet werden, oder es erfolgt ein Geometriescan des Körpers 5 mithilfe eines an dem Roboterarm angebrachten Sensors.

In einem zweiten Schritt 102 erfolgt entlang der in dem Schritt 101 geplanten Trajektorien eine hyperspektrale Oberflächenabtastung des gewünschten Zielbereichs, d.h. eines zu untersuchenden Oberflächenbereichs des Körpers 5.

In einem folgenden dritten Schritt 103 werden die erforderlichen physikalischen und chemischen Eigenschaften des abgetasteten Oberflächenbereichs mithilfe einer prädikativen Analyse ermittelt. Dadurch können beispielsweise Aussagen gemacht werden, ob bzw. wie gut der Oberflächenbereich in einem vorangehenden Prozess entschichtet wurde und ob etwa nachgearbeitet werden muss.

In einem vierten Schritt 104 erfolgt durch Mappen der Oberflächeneigenschaften mit den Geometriedaten eine erneute Bahnplanung für eine ergänzende Entschichtung. In einem abschließenden fünften Schritt 1005 erfolgt dann anhand der neu geplanten Trajektorien eine weitere Entschichtung des Oberflächenbereichs an den entsprechenden Stellen. Die Schritte 102 bis 105 können bei Bedarf wiederholt werden.

Das Neuartige der Anordnung und des Verfahrens liegt darin, dass unter Ausnutzung einer bekannten dreidimensionalen Geometrie eines Körpers es möglich ist, die komplette Freiform des Körpers unter für die Messung gleichbleibenden Bedingungen abzufahren bzw. abzutasten. Dadurch entsteht eine bisher unerreichte Flexibilität (kein Umbau/Abänderung, wenn sich die betrachtete Geometrie ändert z.B. auf Grund eines anderen Bauteil-Designs), eine hohe Robustheit der Analyse aufgrund immer gleichbleibende Messbedingung, ein zeitoptimiertes Scannen und ein auf Dauer Kosten sparendes Messsystem wegen optimierten Abläufen, eingesparter manueller Eingriffe und optimierter Folgeprozesse.

Zusätzlich wird der Zustand der kompletten Freiform, und nicht nur einzelne Flächen dieser, charakterisiert und digitalisiert. Dies hat einen großen Nutzen in einer automatisierten und durchgehend digitalisierten Prozesskette, bei der mehrere Abhängigkeiten zwischen den Prozessschritten bestehen. Durch die digitalisierten Informationen über die zu vermessenden Körper wird eine Information über ganze Serien von Körpern zugänglich, die wiederum in den Produktlebenszyklus (auch: digitaler Zwilling) einfließt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Roboterarm
- 1.1: erstes Ende des Roboterarms 1
- 2: hyperspektrale Detektionsvorrichtung
- 2.1: Hyperspektralkamera
- 3: Beleuchtungsvorrichtung
- 4: Steuer- und Recheneinheit
- 5: Körper
- 5.1: Oberflächenbereich des Körpers 5
- 6: Sensor

- 100: Ermittlung der Geometrie des Klrpers 5
- 101: hyperspektrale Abtastung
- 102: Ermittlung der Oberflächeneigenschaften
- 103: Bahnplanung
- 104: weitere Entschichtung

## Patentansprüche

1. Anordnung zur hyperspektralen Oberflächenabtastung eines Körpers (5), aufweisend:
- einen Roboterarm (1),
- eine an dem ersten Ende (1.1) des Roboterarms (1) angeordnete hyperspektrale Detektionsvorrichtung (2),
- eine an dem ersten Ende (1.1) des Roboterarms (1) angeordnete Beleuchtungsvorrichtung (3) und
- eine Steuer- und Recheneinheit (4), die eingerichtet ist, das erste Ende (1.1) des Roboterarms (1) derart entlang vorab ermittelter Trajektorien zu bewegen, dass ein vorbestimmter Oberflächenbereich (5.1) des Körpers (5) hyperspektral abgetastet wird.

2. Anordnung nach Anspruch 1,
**dadurch gekennzeichnet,**
**dass** die Steuer- und Recheneinheit (4) eingerichtet ist, auf Basis von gespeicherten CAD Daten des Körpers (5) oder Daten eines digitalen Zwillings des Körpers (5) die Trajektorien zu ermitteln.

3. Anordnung nach Anspruch 1,
**dadurch gekennzeichnet,**
**dass** die Steuer- und Recheneinheit (4) eingerichtet ist, aufgrund einer automatisierten Geometriemessung des Körpers (5) mit mindestens einem an dem Roboterarm (1) angeordneten Sensor (6) die Trajektorien zu ermittelten.

4. Anordnung nach einem der Ansprüche 1 bis 3,
**dadurch gekennzeichnet,**
**dass** die Steuer- und Recheneinheit (4) eingerichtet ist, aus den abgetasteten hyperspektralen Messdaten des Oberflächenbereichs (5.1) durch prädikative Analyse die physikalischen und/oder chemischen Eigenschaften des Oberflächenbereichs (5.1) zu ermitteln.

5. Anordnung nach einem der vorhergehenden Ansprüche,
**dadurch gekennzeichnet,**
**dass** die hyperspektrale Detektionsvorrichtung (2) eine Hyperspektralkamera (2.1) aufweist.

6. Anordnung nach Anspruch 5,
**dadurch gekennzeichnet,**
**dass** Steuer- und Recheneinheit (4) eingerichtet ist, die Hyperspektralkamera (2.1) über dem Oberflächenbereich (5.1) in einem Fokusabstand zu halten und die Aufnahmerichtung der Hyperspektralkamera (2.1) senkrecht zu der Oberfläche des Körpers (5) auszurichten.

7. Anordnung nach Anspruch 5 oder 6,
**dadurch gekennzeichnet,**
**dass** die Steuer- und Recheneinheit (4) eingerichtet ist, die Relativgeschwindigkeit einer Abtastlinie der Hyperspektralkamera (2.1) zu dem Oberflächenbereich (5.1) konstant zu halten.

8. Anordnung nach einem der vorhergehenden Ansprüche,
**dadurch gekennzeichnet,**
**dass** die Beleuchtungsvorrichtung (3) eingerichtet ist, die Winkelstellung der Ausleuchtung des Oberflächenbereichs (5.1) zu verändern.

9. Anordnung nach einem der vorhergehenden Ansprüche,
**dadurch gekennzeichnet,**
**dass** die Steuer- und Recheneinheit (4) eingerichtet ist, die abgetasteten hypespektralen Messdaten mit dem Oberflächenbereich (5.1) des Körpers (5) zu mappen und daraus Trajektorien für einen weiteren Entschichtungsprozess des Körpers (5) abzuleiten.

10. Automatisiertes Verfahren zur hyperspektralen Oberflächenabtastung eines Körpers (5),
wobei eine an einem Roboterarm (1) angeordnete hyperspektrale Detektionsvorrichtung (2) und eine Beleuchtungsvorrichtung (3) derart entlang vorab ermittelter Trajektorien bewegt werden, dass ein vorbestimmter Oberflächenbereich (5.1) des Körpers (5) hyperspektral abgetastet wird (101).

11. Automatisiertes Verfahren nach Anspruch 10,
wobei auf Basis von gespeicherten CAD Daten des Körpers (5) oder Daten eines digitalen Zwillings des Körpers (5) die Trajektorien ermittelt werden (100).

12. Automatisiertes Verfahren nach Anspruch 10,
Wobei aufgrund einer automatisierten Geometriemessung des Körpers (5) mit mindestens einem an dem Roboterarm (1) angeordneten Sensor (6) die Trajektorien ermittelt werden (100).

13. Automatisiertes Verfahren nach einem der Ansprüche 10 bis 12,
wobei aus den abgetasteten hyperspektralen Messdaten des Oberflächenbereichs (5.1) durch prädikative Analyse die physikalischen und/oder chemischen Eigenschaften des Oberflächenbereichs (5.1) ermittelt werden (102).

14. Automatisiertes Verfahren nach einem der Ansprüche 10 bis 13,
wobei die abgetasteten hypespektralen Messdaten mit dem Oberflächenbereich (5.1) des Körpers (5) gemappt werden und daraus Trajektorien für einen weiteren Entschichtungsprozess des Körpers (5) abgeleitet werden (103).
